# EUROPÄISCHE PATENTSCHRIFT

(11) **EP 0 924 132 B1**
(45) Veröffentlichungstag und Bekanntmachung des Hinweises auf die Patenterteilung: **11.06.2003**
(21) Anmeldenummer: 98121950.4
(22) Anmeldetag: 19.11.1998
(51) Int. Cl.: B62D 55/125

(54) **Kettenfahrzeug mit einem Fahrantrieb**
Track vehicle with drive gear
Véhicule à chenilles avec dispositif d'entraînement

(30) Priorität: 19.12.1997 DE 19756683
(43) Veröffentlichungstag der Anmeldung: 23.06.1999
(73) Patentinhaber: Rheinmetall Landsysteme GmbH, 24159 Kiel (DE)
(72) Erfinder: Eckhoff, Detlev, 24238 Martensrade (DE)
(74) Vertreter: Hansmann, Dierk, Dipl.-Ing.

(56) Entgegenhaltungen:
- EP-A- 0 825 411
- DE-A- 2 937 813
- DE-A- 4 314 206
- DE-A- 19 537 945

## Beschreibung

Die Erfindung bezieht sich auf ein Kettenfahrzeug mit einem Fahrantrieb in Form eines elektrischen Antriebes, wobei ein Antriebsmotor mit einem elektrischen Generator zur Versorgung von elektrischen Motoren gekoppelt ist und die elektrischen Motore Kettenantriebsrädern zugeordnet sowie über Steuereinrichtungen verknüpfbar und einstellbar sind.

Nach der DE-A-195 37 945 ist bereits ein elektrischer Antrieb für Kettenfahrzeuge bekannt, wobei elektrische Motoren Kettenantriebsrädern zugeordnet sind.

Ein generelles Problem bei Antriebskonzepten für Kettenfahrzeuge ist die Verwirklichung von wachsenden Panzer-Schutzanforderungen gegen Beschuß und Splitterwirkung. Dieses betrifft vor allem Schützenkampfwagen, wobei im wesentlichen frontplazierte Fahrantriebe zu Gunsten eines breiten Heckausstieges eingesetzt werden. Mit steigenden Schutzanforderungen führt diese Anordnung zu immer höheren Gesamtgewichten, da sich der gesamte Triebwerksblock mit der dahintersitzenden Besatzung im geschützten Fahrzeuggehäusebereich befindet. Dabei verschlechtern sich auch die Sichtmöglichkeiten nach vorn für die Besatzung wegen der nach vorn längeren Bugsektion.

Aufgabe der Erfindung ist es, bei einer gattungsgemäßen Anordnung mit elektrischen Antrieben, den geschützten Innenraum besser zu nutzen und Teile der Besatzung relativ weit im vorderen Fahrzeugbereich unterzubringen.

Die Lösung dieser Aufgabe erfolgt erfindungsgemäß dadurch, daß mindestens zwei Antriebseinheiten mit Antriebsmotor und Generator angeordnet sind und beiderseits des Fahrzeuggehäuses jeweils eine Antriebseinheit im Bereich der Kettenschulter oberhalb der Antriebsketten angeordnet ist.

Hierdurch wird der Vorteil erreicht, daß der mittige Front- und Heckbereich frei von Antriebskomponenten gehalten wird und dadurch folgendes durchführbar ist:
- die Realisierung eines breiten Heckausstiegs für die Besatzung,
- die Verringerung des Antriebsausfalls (Mobility Kill) bei einem Treffer im Frontbereich des Fahrzeugs,
- eine verbesserte Bodensicht für die Besatzung nach vorn und günstigere Waffeneinbauorte vorn im Fahrzeug,
- Verminderung von thermischer Entdeckbarkeit vorn in der Hauptbedrohungsrichtung, da keine heißen Antriebskomponenten im Bug untergebracht sind,
- die Verwendung von standardisierten Antriebsmodulen für eine Familie von Fahrzeugen, da in Grenzen wahlfreie Einbauorte am Fahrzeug und kleinere Teileinheiten realisiert werden,
- die Kombination von standardisierten Antriebsmodulen, die in wenige Modul-Leistungsklassen untergliedert sind, zu einer Vielzahl von Fahrantrieben verschiedener Leistungsklassen,
- die Realisierung einer vereinheitlichten Anordnung des Fahrantriebs bei verschiedenen Fahrzeugen, da die Antriebsmodule nicht in den Kernbereichen des Fahrzeugs (mittig, vorne oder hinten) untergebracht sind.

Eine günstige Ausbildung wird dadurch geschaffen, daß jede Antriebseinheit dem hinteren Fahrzeuggehäuse oberhalb der Antriebsketten den Kettenschultern zugeordnet ist.

Um eine flexible Anpassung an die entsprechenden unterschiedlichen Ausbildungen zu gewährleisten, wird vorgeschlagen, daß in jeder Antriebseinheit die Elemente des Antriebsmotors und des Generators als Module integriert sind.

Weiterhin ist vorgesehen, daß Antriebsmotor und Generator jeweils hintereinander angeordnet sind, wobei der Generator in Fahrtrichtung vor dem Antriebsmotor liegt.

Zur Erhaltung der Betriebsbereitschaft bei Ausfall von Einzelaggregaten, ist vorgesehen, daß die beiderseits des Fahrzeuggehäuses angeordneten Elemente der Antriebseinheit über elektronische Steuereinheiten miteinander verknüpfbar sind.

Um eine Zusammenstellung von Einzelaggregaten entsprechend den Anforderungen und einen Austausch zu gewährleisten, wird vorgeschlagen, daß jede Antriebseinheit mit ihren Elementen als modules Baukastensystem aufgebaut ist.

In der Zeichnung ist ein Ausführungsbeispiel der Erfindung schematisch dargestellt. Es zeigen:

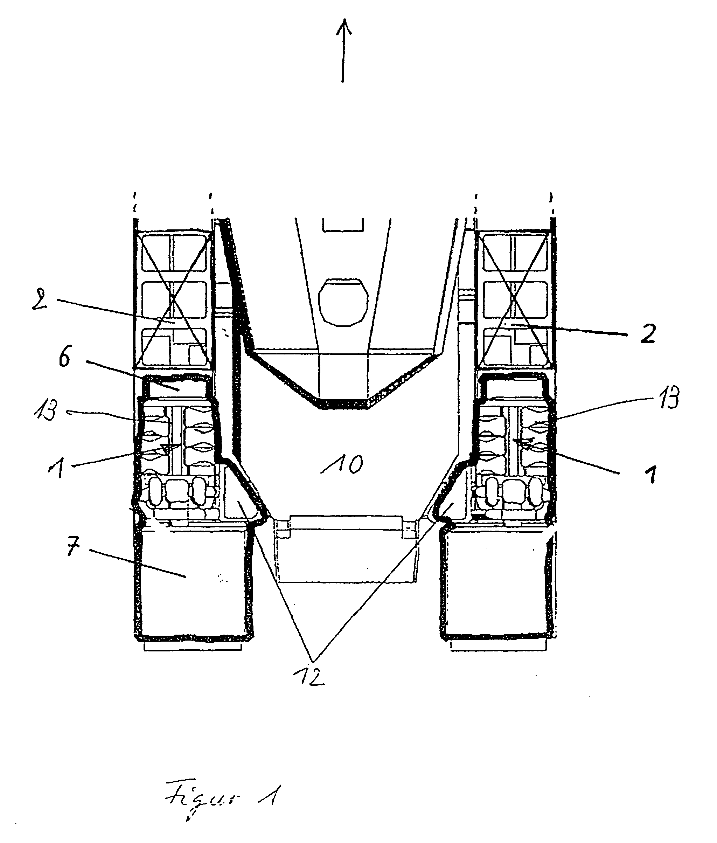

- Fig. 1: eine Draufsicht auf einen Heckbereich eines Fahrzeuges und

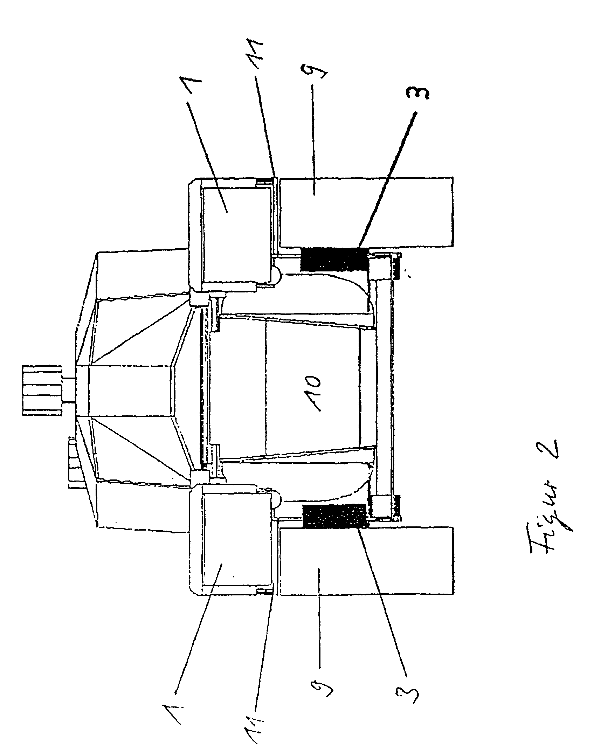

- Fig. 2: eine Rückansicht auf ein Fahrzeug.

Bei den dargestellten Kettenfahrzeugen sind Antriebsketten 9 beiderseits des Fahrzeuggehäuses 10 angeordnet, wobei die Antriebsketten 9 über zugeordnete Antriebe 3 mit elektrischen Motoren antreibbar sind.

Die Antriebe 3 werden beispielsweise von einem Dieselmotor 13 mit einem elektrischen Generator 6 als Antriebseinheit 1 über Kabel versorgt und sind beiderseits des Fahrzeuggehäuses 10 im hinteren Bereich der Kettenschultern 11 angeordnet.

Die Antriebseinheit 1 ist modulartig aufgebaut und nimmt neben dem Dieselmotor 13 und dem Generator 6 auch alle weiteren Aggregate, wie Kühler 7, Luftansaugung 12 und eine Elektronikeinheit 2 auf, die eine standardisierte Schnittstelle bezüglich der Kühlung und der elektrischen Anschlüsse besitzt und leicht austauschbar aufgebaut ist. Die elektronische Steuereinheit 2 ist dabei vor dem Generator 6 angeordnet.

Über die Elektronikeinheit sind auch die Aggregate jeder Seite miteinander koppelbar, um bei Ausfall eines Aggregates einen Notbetrieb aufrecht zu erhalten.

## Patentansprüche

1. Kettenfahrzeug mit einem Fahrantrieb in Form eines elektrischen Antriebes (3), wobei ein Antriebsmotor (13) mit einem elektrischen Generator (6) zur Versorgung von elektrischen Motoren (3) gekoppelt ist und die elektrischen Motore (3) Kettenantriebsrädern zugeordnet sowie über Steuereinrichtungen (2) verknüpfbar und einstellbar sind, **dadurch gekennzeichnet, daß** mindestens zwei Antriebseinheiten (1) mit Antriebsmotor (13) und Generator (6) angeordnet sind und beiderseits des Fahrzeuggehäuses (10) jeweils eine Antriebseinheit (1) im Bereich der Kettenschulter (11) oberhalb der Antriebsketten (9) angeordnet ist.

2. Fahrantrieb nach Anspruch 1, **dadurch gekennzeichnet, daß** jede Antriebseinheit (1) zwischen dem hinteren Fahrzeuggehäuse (10) und den Kettenschultern (11) oberhalb der Antriebsketten (9) zugeordnet ist.

3. Fahrantrieb nach Anspruch 1 oder 2, **dadurch gekennzeichnet, daß** in jeder Antriebseinheit (1) die Elemente des Antriebsmotors (13) und des Generators (6) als Module integriert sind.

4. Fahrantrieb nach einem der Ansprüche 1 bis 3, **dadurch gekennzeichnet, daß** Antriebsmotor (13) und Generator (6) jeweils hintereinander angeordnet sind, wobei der Generator (6) in Fahrtrichtung vor dem Antriebsmotor (13) liegt.

5. Fahrantrieb nach einem der Ansprüche 1 bis 4, **dadurch gekennzeichnet, daß** die beiderseits des Fahrzeuggehäuses (10) angeordneten Elemente der Antriebseinheit (1) über elektronische Steuereinheiten miteinander verknüpfbar sind.

6. Fahrantrieb nach einem der Ansprüche 1 bis 5, **dadurch gekennzeichnet, daß** jede Antriebseinheit (1) mit ihren Elementen als modules Baukastensystem aufgebaut ist.

## Claims

1. Track-type vehicle with a travelling gear in the form of an electric drive (3), wherein a drive motor (13) is coupled to an electric generator (6) for powering electric motors (3) and the electric motors (3) are associated with track drive wheels and can also be coupled and adjusted via control devices (2), **characterised in that** at least two drive units (1) with associated drive motor (13) and generator (6) are arranged and in each case a drive unit (1) is arranged on both sides of the vehicle housing (10) in the region of the track shoulder (11) above the drive tracks (9).

2. Travelling gear according to claim 1, **characterised in that** each drive unit (1) is allocated between the rear vehicle housing (10) and the track shoulders (11) above the drive tracks (9).

3. Travelling gear according to claim 1 or 2, **characterised in that** the elements of the drive motor (13) and of the generator (6) are integrated as modules in each drive unit (1).

4. Travelling gear according to one of claims 1 to 3, **characterised in that** the drive motor (13) and the generator (6) are in each case arranged behind one another, the generator (6) lying in the direction of travel in front of the drive motor (13).

5. Travelling gear according to one of claims 1 to 4, **characterised in that** the elements of the drive unit (1) arranged on both sides of the vehicle housing (10) can be coupled to one another via electronic control units.

6. Travelling gear according to one of claims 1 to 5, **characterised in that** each drive unit (1) together with its elements is fabricated as a modular construction system.

## Revendications

1. Véhicule à chaînes pourvu d'un entraînement en forme de propulsion électrique (3), un moteur entraînant (13) un générateur électrique (6) destiné à l'alimentation de moteurs électriques (3) et les moteurs électriques (3) étant reliés à des roues d'entraînement à chaîne ainsi que reliables et réglables par l'intermédiaire de dispositifs de commande 2°, et **caractérisé en ce que** au moins deux unités d'entraînement (1) avec moteur d'entraînement (13) et générateur (6) ont été prévues et **en ce que** une unité d'entraînement (1) a été disposé de part et d'autre de la carrosserie du véhicule (10) dans la zone des épaulements de chaînes (11), au-dessus des chaînes d'entraînement (9).

2. Appareil de roulement selon la revendication 1, **caractérisé en ce que** chaque unité d'entraînement (1° a été disposée entre la carrosserie arrière du véhicule (10) et les épaulements de chaînes (11), au-dessus des chaînes d'entraînement (9).

3. Appareil de roulement selon la revendication 1 ou 2, **caractérisé en ce que**, dans chaque unité d'entraînement, les éléments du moteur d'entraînement (13) et du générateur (6) ont été intégrés sous forme de module.

4. Appareil de roulement selon une des revendications 1 à 3, **caractérisé en ce que** le moteur d'entraînement (13) et le générateur (6) ont été disposés l'un derrière l'autre, le générateur étant situé dans la direction de roulement, devant le moteur d'entraînement (13).

5. Appareil de roulement selon une des revendications 1 à 4, **caractérisé en ce que** les éléments de l'unité d'entraînement (1) situés de part et d'autre de la carrosserie du véhicule (10) peuvent être reliés par l'intermédiaire d'unités de commande électroniques.

6. Appareil de roulement selon une des revendications 1 à 5, **caractérisé en ce que** chaque unité d'entraînement (1) avec ses éléments se présente sous la forme d'un système de construction par blocs modulaire.
